Europäisches Patentamt

**European Patent Office**

Office européen des brevets

(19)

(11) Publication number: **0 407 210 B1**

## EUROPEAN PATENT SPECIFICATION

(12)

(45) Date of publication of patent specification: **28.09.94**  (51) Int. Cl.[5]: **A62D 3/00**, B01D 53/36

(21) Application number: **90307404.5**

(22) Date of filing: **06.07.90**

(54) **Method of decomposing chlorofluorocarbons.**

(30) Priority: **07.07.89 JP 176012/89**

(43) Date of publication of application:
**09.01.91 Bulletin 91/02**

(45) Publication of the grant of the patent:
**28.09.94 Bulletin 94/39**

(84) Designated Contracting States:
**CH DE FR GB IT LI LU NL SE**

(56) References cited:
**GB-A- 1 500 647**
**US-A- 3 469 934**
**US-A- 4 053 556**
**US-A- 4 053 557**

**CHEMISTRY LETTERS, no. 11, November 1989, pages 1901-1904, The Chemical Society of Japan;S. OKAZAKI et al.:"Decomposition of chlorofluorocarbons by the reaction with water vapor catalyzed by iron oxide supported on activated carbon"**

**CHEMICAL ABSTRACTS, vol. 84, no. 6, 9th February 1976, page 273, abstract no.34982w, Columbus, Ohio, US; & JP-A-75 92 878**

(73) Proprietor: **NGK INSULATORS, LTD.**
**2-56, Suda-cho, Mizuho-ku**
**Nagoya City Aichi Pref. (JP)**

Proprietor: **Hiraoka, Masakatsu**
**39-763, Kohata,**
**Okurayama**
**Uji-City, Kyoto-Fu (JP)**

(72) Inventor: **Imoto, Yoshinori**
**57, Nishizaki-cho 2-chome,**
**Chikusa-ku**
**Nagoya City, Aichi Pref. (JP)**
Inventor: **Hara, Katsunosuke**
**1-87, Unoshima,**
**Hitotsugi-cho**
**Kariya City, Aichi Pref. (JP)**
Inventor: **Hiraoka, Masakatsu**
**39-763, Kohata Okurayama**
**Uji City, Kyoto-fu (JP)**

(74) Representative: **Paget, Hugh Charles Edward et al**
**MEWBURN ELLIS**
**York House**
**23 Kingsway**
**London WC2B 6HP (GB)**

Rank Xerox (UK) Business Services
(3.10/3.09/3.3.3)

EP 0 407 210 B1

**Description**

The present invention relates to a method of treating chlorofluorocarbons, more particularly a method of decomposing these compounds. By this term, we mean both compounds in which the hydrogen of the corresponding hydrocarbon is fully substituted by F and Cl and also compounds in which the hydrogen is only partly substituted by F and Cl (chlorofluorohydrocarbons). These compounds will in this description all be called chlorofluorocarbons, for convenience.

Chlorofluorocarbons (CFCs) are said to be a cause of worsening of the environment of the earth, because if discharged into the air they pass into the ozone layer and are decomposed by the ultraviolet radiation from the sun and generate active chlorine atoms which destroy the ozone layer. Therefore, the development of a technique to decompose chlorofluorocarbons is desirable, in addition to development of substitutes for them.

The known techniques of decomposing chlorofluorocarbons are firstly the pressurized combustion method, which involves combusting and decomposing the chlorofluorocarbon under pressure in a sealed vessel and secondly the supercritical water method which involves mixing an aqueous solution of chlorofluorocarbon with super-pure water and reacting the same under conditions of a temperature of about 400°C and a pressure of about 360 atm.

Another known technique is described in US-A- 3 469 934. Document US-A- 3 469 934 discloses the catalytic decomposition of Freon, which is a chlorofluorocarbon, by contact with a catalyst having an operating temperature of about 315°C. The catalyst is, e.g., a mixture of manganese dioxide and copper oxide. No values for the space velocity are disclosed.

The main disadvantage of the pressurized combustion method is that the temperature and the pressure required for combustion are elevated to above the usual conditions required for combusting most substances of about 800-900°C and an ambient pressure, in order to improve the decomposition efficiency. The supercritical water method, on the other hand, involves very high investment cost in order to provide the necessary high pressure.

An object of the present invention is to solve the above problems.

Another object of the present invention is to provide a method of decomposing chlorofluorocarbons which can decompose chlorofluorocarbon economically with a high decomposition efficiency at around the usual conditions required for combusting substances.

In the attempt to achieve the above objects, the inventors have made much research and many experiments. The present invention has resulted.

The present invention is set out in claim 1.

The reason why the temperature is limited to not less than 200°C is that the decomposition of chlorofluorocarbon by oxidation is insufficient at a temperature of less than 200°C, as shown in the later described Example 1. Preferably, the decomposition is effected at a temperature of 400-600°C. In this temperature range, the efficiency of decomposition of the chlorofluorocarbon by oxidation reaches a peak. At temperatures above 600°C, good decomposition efficiency can be obtained, but improvement of the decomposition efficiency cannot be expected and the cost of energy for elevating the decomposition temperature is wasted.

The reason why the space velocity (SV) is limited to not more than 50,000 (hr$^{-1}$) is because the contacting time of the catalyst and the gas containing the chlorofluorocarbon is insufficient, so that the decomposition efficiency is decreased, if the SV is over 50,000 (hr$^{-1}$). Though the space velocity has no lower limit with no particular problem as regards efficiency, the amount of the catalyst is wastefully increased, increasing the catalyst cost, if the space velocity is below 2,000 (hr$^{-1}$). Therefore, the space velocity is preferably within a range of 2,000-20,000 (hr$^{-1}$).

Types and shapes of the catalyst are not restricted. However, the catalyst may be selected from the oxides of the metals Pt, Rh, Pd and mixtures thereof, or the metals themselves. In addition, use of a catalyst consisting of components A and B is effective, the component A being a single oxide of a metal selected from the group consisting of Zr, Ti, Al, W and Si or a complexed multi-oxide of at least two metals selected from Zr, Ti, Al, W and Si, and the component B being a metal or metals selected from Pt, Rh, Pd or an oxide or oxides thereof. Especially, the use of the latter catalyst is preferable in that the catalyst per se has acidic property and exhibits a remarkable resistance to acid and can decompose and remove chlorofluorocarbon gas efficiently for a long period in the presence of HF, HCl, etc., which are produced by decomposition of the gas.

If a carrier of $ZiO_2$-$TiO_2$ or $ZrO_2$-$TiO_2$-$Al_2O_3$ system of a large specific surface area of at least 10 m$^2$/g is used as a catalyst carrier, a high catalytic activity can be exhibited even at low temperatures as shown in the later described Examples, and a good property of decomposing and removing chlorofluorocarbon can be exhibited even at high space velocities. In addition, the catalyst carrier can be prepared so easily that it can be formed into any shape, such as, pellet, plate, cylinder, lattice, honeycomb or the like. Moreover, the catalyst carrier can have good mechanical and physical properties, such as crush strength, wear resistance, shutter strength and the like, so that it can be used stably for a long time.

A Zr source material for preparing the catalyst carriers, such as, $ZrO_2$-$TiO_2$ system carrier, can be selected from inorganic Zr compounds and organic Zr compounds. Preferred inorganic Zr compounds are, for example, zirconyl nitrate, zirconyl sulfate and zirconyl oxalate. A Ti source material for preparing the catalyst carriers $ZrO_2$-$TiO_2$, etc., can be selected from inorganic titanium compounds, such as, titanium chloride, titanium sulfate and the like, and organic titanium compounds, such as titanium oxalate, tetraisopropyl titanate, and the like.

The shape of the catalyst carrier is not restricted. Integral honeycomb structural bodies having an equivalent diameter of throughholes of not more than 30 mm and an open porosity of not less than 50%, are particularly preferable. This is because such honeycomb structural bodies can decrease the pressure loss of the catalyst carriers and achieve high decomposition efficiencies even at high space velocities. However, if the equivalent diameter of the throughholes exceeds 30 mm, the efficiency of removal of chlorofluorocarbon is decreased. Also, if the open porosity is less than 50%, the pressure loss of the catalyst carriers becomes high.

As a decomposing aid, use of $CH_4$ or $H_2O$ is effective. The present invention is not especially restricted to the use and the type of the decomposing aid. However, if the content of chlorofluorocarbon series substance in the chlorofluorocarbon containing gas is high, injection of $CH_4$ , $H_2O$, or $C_6H_6$ , etc., is effective in aiding the decomposition of the chlorofluorocarbon.

For a better understanding of the present invention, reference is made to the accompanying drawings, in which:

Fig. 1 is a flow sheet of an embodiment of the process for carrying out the present invention into effect;

Fig. 2 is a graph of characteristic curves showing relations between treating temperature and decomposition percentage of chlorofluorocarbon taking space velocity as a parameter; and

Fig. 3 is a graph showing relations between use time of various catalysts and decomposition percentage.

The present invention will be illustrated in more detail by the following Examples.

Example 1

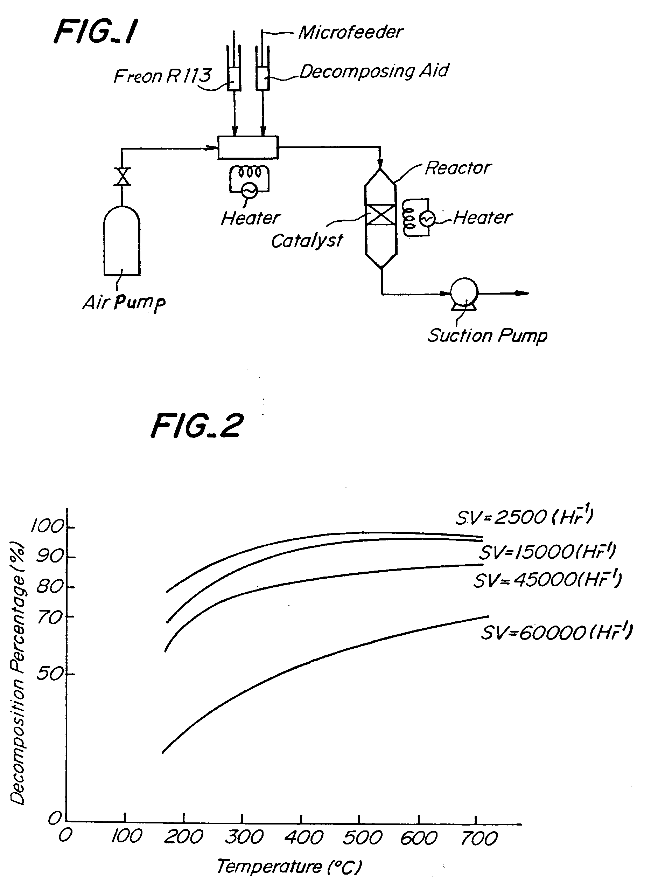

Using an experimental apparatus of the flow sheet as shown in Fig. 1 and a finished catalyst prepared by supporting Pt on a honeycomb shaped carrier composed of a complexed oxide of Zr:Ti = 8.5:1.5 (mole ratio) and having a pore opening of 2.0 mm and a partition wall thickness of 0.4 mm in an amount of 1.5 g of Pt per litre of the carrier, decomposition of an exhaust gas containing Freon R113 is effected under the conditions as shown in the following Table 1 to obtain the results as shown in Table 1. Freon R113 is $CCl_2FCClF_2$.

The relationship between the treating temperature and the decomposition percentage is shown in Fig. 2.

As seen from Table 1 and Fig. 2, good decomposition percentages can be obtained, if the treating temperature is set to not less than 200°C and the space velocity SV is set to not more than 50,000 ($hr^{-1}$).

## Table 1

| No. | Temper- ature °C | Catalyst type | SV (hr$^{-1}$) | Freon R113 concentration at inlet (ppm) | Decomposition percentage (%) | Evalua- tion |
|---|---|---|---|---|---|---|
| 1 | 200 | metal | 2,500 | 500 | 84 | ◯ |
| 2 | 300 | " | " | " | 93 | ◎ |
| 3 | 400 | " | " | " | 98 | ◎ |
| 4 | 500 | " | " | " | 99 | ◎ |
| 5 | 600 | " | " | " | 99+ | ◎ |
| 6 | 700 | " | " | " | 99+ | ◎ |
| 7 | 200 | " | 15,000 | " | 74 | △ |
| 8 | 300 | " | " | " | 89 | ◯ |
| 9 | 400 | " | " | " | 94 | ◎ |
| 10 | 500 | " | " | " | 97 | ◎ |
| 11 | 600 | " | " | " | 98 | ◎ |
| 12 | 700 | " | " | " | 99 | ◎ |
| 13 | 200 | " | 45,000 | " | 70 | △ |
| 14 | 300 | " | " | " | 78 | △ |
| 15 | 400 | " | " | " | 83 | ◯ |
| 16 | 500 | " | " | " | 87 | ◯ |
| 17 | 600 | " | " | " | 89 | ◯ |
| 18 | 700 | " | " | " | 90 | ◎ |
| 19 | 200 | " | 60,000 | " | 30 | × |
| 20 | 300 | " | " | " | 44 | × |
| 21 | 400 | " | " | " | 54 | × |
| 22 | 500 | " | " | " | 61 | × |
| 23 | 600 | " | " | " | 67 | × |
| 24 | 700 | " | " | " | 72 | △ |
| 25 | 500 | " | 2,500 | 2,000 | 99+ | ◎ |
| 26 | 500 | " | 15,000 | " | 99+ | ◎ |
| 27 | 500 | " | 2,500 | 5,000 | 99+ | ◎ |
| 28 | 500 | " | 15,000 | " | 99+ | ◎ |

[Decomposition percentage]　　[Evaluation]

　　　　　　90% +　　　　　　　　◎

　　　　　　80~89%　　　　　　　◯

　　　　　　70~79%　　　　　　　△

　　　　　　69% –　　　　　　　　×

## Example 2

Decomposition tests of an exhaust gas containing Freon R113 are effected under the following condition to obtain the results as shown in Table 2 below.

Gas composition:　　500 ppm of Freon R113, remainder air

4

Space velocity: 2,500 hr$^{-1}$
Temperature: 500°C

Catalyst type:

Catalyst A: Pt
Catalyst B: Pt + Rh + Pd
Catalyst C: Pt + Rh + Pd + Ru + Mn + Cu
Catalyst D: Pt + Rh + Pd + Ru + Mn + Cu + Cr + Fe
Catalyst E: Ni
Catalyst F: Ce
Catalyst G: V

Amount of the catalyst total 1.5 g/l of carrier.

Table 2

| No. | Temperature °C | Catalyst type | SV (hr$^{-1}$) | Decomposition percentage (%) | Evaluation |
|-----|----------------|---------------|----------------|------------------------------|------------|
| 1 | 500 | A | 2,500 | 99 | ◎ |
| 2 | 500 | B | 2,500 | 99 + | ◎ |
| 3 | 500 | C | 2,500 | 99 + | ◎ |
| 4 | 500 | D | 2,500 | 99 + | ◎ |
| 5 | 500 | E | 2,500 | 10 | X |
| 6 | 500 | F | 2,500 | 14 | X |
| 7 | 500 | G | 2,500 | 8 | X |

As seen from Table 2, good decomposition percentages can be obtained by the use of the catalyst selected from Pt, Rh, Pd, Ru, Mn, Cu, Cr and Fe.

Example 3

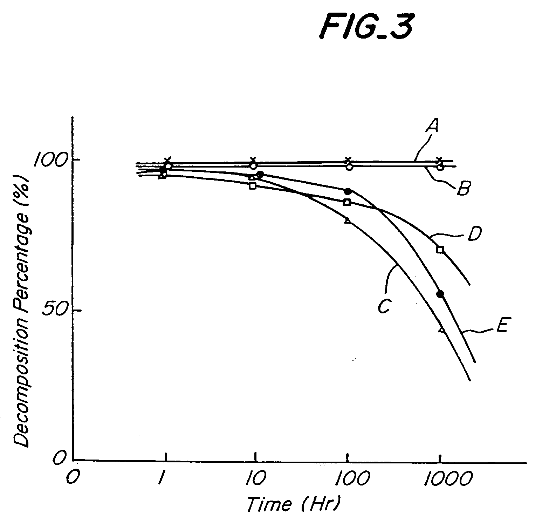

Using a honeycomb shaped body supporting Pt (1.5 g/l of carrier), decomposition tests of an exhaust gas containing Freon R113 are effected under the following condition to obtain the results as shown in Fig. 3.

Gas composition: 500 ppm of Freon R113, remainder air
Space velocity: 2,500 hr$^{-1}$
Temperature: 500°C

Carrier

Carrier A: Zr : Ti = 7 : 3 (mole ratio)
Carrier B: Ti : Si = 7 : (mole ratio)
Carrier C: mullite type
Carrier D: cordierite type
Carrier E: zeolite

As is seen from Fig. 3, the catalyst can withstand use for a long period, if a carrier is used which is not deteriorated easily by hydrofluoric acid, hydrochloric acid, and the like which are generated in the decomposition of the fluorocarbon substance.

Example 4

Using a honeycomb shaped body as the carrier for the catalyst (Pt, 1.5 g/l of carrier), decomposition tests of an exhaust gas are effected under the following conditions to obtain the results as shown in Table 3.

Gas composition: 500 ppm of Freon R113, remainder air

EP 0 407 210 B1

Space velocity:    2,500 hr$^{-1}$
Temperature:       500 °C

Table 3

| No. | Equivalent diameter of throughholes (mm) | Open porosity (%) | Pressure loss (mmH$_2$O) | Decomposition percentage (%) | Evaluation |
|---|---|---|---|---|---|
| 1 | 1.6 | 64 | 18 | 99 | ○ |
| 2 | 2.0 | 69 | 15 | 99 | ○ |
| 3 | 2.0 | 51 | 34 | 87 | ○ |
| 4 | 2.0 | 44 | 293 | 71 | X |
| 5 | 5.0 | 67 | 16 | 91 | ○ |
| 6 | 5.0 | 51 | 74 | 82 | ○ |
| 7 | 5.0 | 39 | 240 | 63 | X |
| 8 | 15 | 62 | 13 | 83 | ○ |
| 9 | 15 | 51 | 64 | 74 | ○ |
| 10 | 15 | 42 | 163 | 61 | X |
| 11 | 30 | 73 | 11 | 78 | ○ |
| 12 | 30 | 56 | 95 | 70 | ○ |
| 13 | 50 | 69 | 8 | 52 | X |

[Evaluation]
X ... Decomposition percentage is less than 70% or pressure loss is 150 mm H$_2$O or higher
○ ... Decomposition percentage is 79% or higher and the pressure loss is less than 150 mmH$_2$O

As is seen from Table 3, if a honeycomb shaped body having an equivalent diameter of throughholes of not over than 30 mm and an open porosity of not less than 50% is used as the catalyst carrier, good decomposition percentages can be obtained with low pressure loss.

As clearly apparent from the foregoing explanations, the present invention does not necessitate the condition of high temperature and high pressure and can decompose chlorofluorocarbons economically with high decomposition efficiency at conditions similar to those conventionally used for decomposing substances, so that the energy cost can be reduced considerably and expensive apparatus can be dispensed with.

**Claims**

1.  A method of decomposing a chlorofluorocarbon, comprising contacting a gas containing the chlorofluorocarbon with a catalyst at conditions of a temperature of not less than 200 °C and a space velocity of not more than 50,000 (hr$^{-1}$), wherein the catalyst comprises at least one material selected from the metals Pt, Rh and Pd and oxides thereof.

2.  The method of claim 1, wherein the catalyst consists of components A and B, the component A being a single oxide of a metal selected from Zr, Ti, Al, W and Si or a complex multi-oxide of at least two metals selected from Zr, Ti, Al, W and Si, and the component B being the said material or materials selected from the metals Pt, Rh and Pd, and oxides thereof.

3.  The method of any one of claim 1 or claim 2, wherein the catalyst uses a carrier of an integral honeycomb type structural body having an equivalent diameter of its throughholes of 30 mm or less and an open porosity of not less than 50%.

4.  The method of any one of claims 1 to 3, wherein said temperature is in the range 400-660 °C.

6

5. The method of any one of claims 1 to 4, wherein said space velocity is in the range of 2,000-20,000 $(hr^{-1})$.

6. The method of any one of claims 1 to 5, wherein the catalyst is on a carrier of a large specific surface area of at least 10 $m^2/g$ selected from $ZrO_2$-$TiO_2$ and $ZrO_2$-$TiO_2$-$Al_2O_3$.

**Patentansprüche**

1. Verfahren zum Zersetzen eines Chlorfluorkohlenstoffs, umfassend das In-Kontakt-Bringen eines den Chlorfluorkohlenstoff enthaltenden Gases mit einem Katalysator unter den Bedingungen einer Temperatur von nicht weniger als 200°C und einer Raumgeschwindigkeit von nicht mehr als 50 000 $(h^{-1})$, worin der Katalysator zumindest ein Material umfaßt, das aus den Metallen Pt, Rh und Pd und Oxiden davon ausgewählt ist.

2. Verfahren nach Anspruch 1, worin der Katalysator aus den Komponenten A und B besteht, wobei Komponente A ein einzelnes Oxid eines aus Zr, Ti, Al, W und Si ausgewählten Metalls oder ein komplexes Multioxid aus zumindest zwei Metallen ist, die aus Zr, Ti, Al, W und Si ausgewählt sind, und Komponente B das genannte Material oder Materialien ist/sind, das/die aus den Metallen Pt, Rh und Pd und Oxiden davon ausgewählt ist/sind.

3. Verfahren nach einem der Ansprüche 1 oder 2, worin für den Katalysator ein Träger aus einem einstückigen bienenwabenartigen Strukturkörper mit einem äquivalenten Kreisdurchmesser seiner Durchgangslöcher von 30 mm oder weniger und einer offenen Porosität von nicht weniger als 50% verwendet wird.

4. Verfahren nach einem der Ansprüche 1 bis 3, worin die genannte Temperatur im Bereich von 400-660°C liegt.

5. Verfahren nach einem der Ansprüche 1 bis 4, worin die genannte Raumgeschwindigkeit im Bereich von 2000-20 000 $(h^{-1})$ liegt.

6. Verfahren nach einem der Ansprüche 1 bis 5, worin der Katalysator sich auf einem Träger mit großer spezifischer Oberfläche von zumindest 10 $m^2/g$ befindet, der aus $ZrO_2$-$TiO_2$ und $ZrO_2$-$TiO_2$-$Al_2O_3$ ausgewählt ist.

**Revendications**

1. Méthode de décomposition d'un chlorofluorocarbone comprenant la mise en contact d'un gaz contenant le chlorofluorocarbone avec un catalyseur aux conditions d'une température de pas moins de 200°C et d'une vitesse spatiale de pas plus de 50 000 $(h^{-1})$, où le catalyseur comprend au moins un matériau choisi parmi les métaux Pt, Rh et Pd et leurs oxydes.

2. Méthode de la revendication 1, où le catalyseur comprend les composants A et B, le composant A étant un simple oxyde d'un métal choisi parmi Zr, Ti, Al, W et Si ou un bien un multi-oxyde complexe d'au moins deux métaux choisis parmi Zr, Ti, Al, W et Si et le composant B étant ledit matériau ou les matériaux choisis parmi les métaux Pt, Rh et Pd et leurs oxydes.

3. Méthode selon l'une quelconque des revendications 1 ou 2, où le catalyseur emploie un support d'un corps de structure du type en nid d'abeilles intégré ayant un diamètre équivalent de ses trous de 30 mm ou moins et une porosité ouverte de pas moins de 50%.

4. Méthode selon l'une quelconque des revendications 1 à 3, où ladite température est comprise entre 400 et 660°C.

5. Méthode selon l'une quelconque des revendicaitons 1 à 4, où ladite vitesse spatiale est comprise entre 2 000 et 20 000 $(h^{-1})$.

6. Méthode selon l'une quelconque des revendications 1 à 5, où le catalyseur est sur un support d'une grande aire superficielle spécifique d'au moins 10 m$^2$/g et qui est choisi parmi $ZrO_2$-$TiO_2$ et $ZrO_2$-$TiO_2$-$Al_2O_3$.

## FIG.1

Microfeeder

Freon R113

Decomposing Aid

Reactor

Heater

Catalyst

Heater

Air Pump

Suction Pump

## FIG.2

SV=2500 (Hr⁻¹)

SV=15000(Hr⁻¹)

SV=45000(Hr⁻¹)

SV=60000 (Hr⁻¹)

Decomposition Percentage (%)

Temperature (°C)

# FIG.3